# FASCICULE DE BREVET EUROPEEN

(11) **EP 2 404 536 B1**
(45) Date de publication et mention de la délivrance du brevet: **06.08.2014**
(21) Numéro de dépôt: 11305880.4
(22) Date de dépôt: 07.07.2011
(51) Int. Cl.: A47J 43/046, A47J 43/07

(54) **Récipient de travail comportant une embase amovible et appareil électroménager de préparation culinaire muni d'un tel récipient**
Arbeitsbehälter, der eine abnehmbare Halterungsplatte umfasst, und Elektrohaushaltsgerät zur Essenszubereitung, das mit einem solchen Behälter ausgestattet ist
Work container comprising a removable base and household cooking appliance equipped with such a container

(30) Priorité: 09.07.2010 FR 1055599
(43) Date de publication de la demande: 11.01.2012
(73) Titulaire: SEB S.A., 69130 Ecully (FR)
(72) Inventeur: Maunoury, Damien, 53470 Châlons-du-Maine (FR); Lemarie, Christophe, 53470 Martigné-Sur-Mayenne (FR); Beunache, Michèle, 53300 La Haie-Traversaine (FR)
(74) Mandataire: Bourrières, Patrice

(56) Documents cités:
- US-A- 4 107 791

## Description

La présente invention se rapporte au domaine technique général des appareils électroménagers de préparation culinaire et se rapporte plus particulièrement à un récipient de travail comportant une embase amovible et une enveloppe comprenant une extrémité inférieure munie d'un manchon sur lequel l'embase peut être accouplée par rotation.

De tels récipients de travail munis d'une embase amovible présente l'avantage de permettre un nettoyage aisé du récipient de travail. Cependant, il existe un risque que l'enveloppe soit involontairement désaccouplée de l'embase lorsque l'utilisateur exerce un effort sur la poignée du récipient alors que ce dernier est disposé sur le boitier moteur. En particulier, la demanderesse a constaté que cette manoeuvre involontaire s'effectuait plus fréquemment sur les appareils blender dans lesquels l'accouplement du récipient de travail sur le boitier moteur s'effectue par un simple mouvement de translation verticale du récipient de travail en direction du socle de réception du boitier moteur. En effet, certains utilisateurs cherchent à verrouiller ou à déverrouiller le récipient de travail sur le boitier moteur en exerçant un couple de rotation sur la poignée du récipient qui peut provoquer le désaccouplement de l'enveloppe par rapport à l'embase amovible et le déversement du contenu du récipient sur le boitier moteur, avec un risque de détérioration de ce dernier.

Il est connu, du brevet US 4 107 791, de remédier à cet inconvénient en intégrant un dispositif de verrouillage dans l'embase amovible du récipient de travail de sorte que l'embase amovible ne puisse être démontée que lorsque le récipient de travail est soulevé du boitier moteur. A cet effet, l'embase comporte un ergot de blocage qui est déplacé vers une position de verrouillage, lorsque le récipient de travail repose sur le boitier moteur, dans laquelle il empêche la rotation relative de l'enveloppe par rapport à l'embase amovible et interdit donc le démontage de l'embase amovible. Cependant, dans ce document, la course de déplacement de l'ergot de blocage est faible de sorte que l'ergot passe dans une position de déverrouillage dés lors que le récipient de travail est légèrement soulevé du boitier moteur. En conséquence, si l'utilisateur soulève légèrement le récipient de travail tout en exerçant un couple sur la poignée alors que la partie inférieure est encore engagée dans le socle de réception du boitier, il existe toujours un risque que l'enveloppe se désaccouple involontairement de l'embase amovible.

De plus, dans ce document, l'ergot de verrouillage n'est pas actif lorsque le récipient de travail est posé sur un plan de travail de sorte qu'il est possible d'obtenir un désaccouplement involontaire de l'embase amovible en manipulant le récipient lorsque ce dernier est posé sur un plan de travail.

Aussi, un but de la présente invention est de proposer un récipient de travail muni d'un dispositif de verrouillage qui soit simple et économique à réaliser et qui procure une grande sécurité d'utilisation en empêchant tout désaccouplement involontaire de l'embase amovible par rapport à l'enveloppe du récipient de travail. En particulier, un but de la présente invention est de proposer un récipient de travail muni d'une embase amovible dans lequel le risque de désaccoupler involontairement l'embase amovible alors que le récipient de travail est rempli d'aliments est supprimé.

A cet effet, l'invention se rapporte à un récipient de travail pour appareil électroménager de préparation culinaire comportant une embase amovible et une enveloppe comprenant une extrémité inférieure munie d'une ouverture entourée d'un manchon sur lequel l'embase peut être accouplée par rotation, l'embase comprenant une platine porte-outil destinée à venir au travers de l'ouverture, le récipient de travail comportant des moyens de verrouillage mobiles entre une position de verrouillage, dans laquelle l'embase et l'enveloppe ne peuvent pas être désaccouplées, et une position de déverrouillage dans laquelle elles peuvent être désaccouplées, caractérisé en ce que les moyens de verrouillage occupent la position de verrouillage lorsque le récipient de travail est tenu à l'endroit et la position de déverrouillage lorsque le récipient de travail est tenu à l'envers.

Par récipient de travail tenu à l'endroit, il faut comprendre que le récipient est disposé dans une position d'usage normal, c'est-à-dire avec l'enveloppe disposée au dessus de l'embase. A l'inverse, le récipient sera considéré comme tenu à l'envers lorsque l'embase sera disposée au dessus de l'enveloppe.

Selon une autre caractéristique de l'invention, les moyens de verrouillage se déplacent de la position de verrouillage à la position de déverrouillage sous l'effet de la gravité, lors du retournement du récipient de travail.

Selon une autre caractéristique de l'invention, les moyens de verrouillage comportent au moins un ergot de blocage coulissant dans une glissière verticale entre une position de verrouillage occupée lorsque le récipient de travail est tenu à l'endroit et une position de déverrouillage occupée lorsque le récipient est tenu à l'envers.

Selon encore une autre caractéristique de l'invention, le manchon comporte des nervures venant s'engager par rotation dans une rainure de guidage portée par l'embase pour former une liaison de type baïonnette.

Selon encore une autre caractéristique de l'invention, en position de verrouillage, l'ergot de blocage s'étend au travers de la rainure de guidage et constitue une butée empêchant la rotation de l'enveloppe dans le sens du démontage.

L'invention concerne également un appareil électroménager de préparation culinaire comportant un boîtier moteur muni d'un socle de réception, caractérisé en ce qu'il comporte un récipient de travail tel que précédemment décrit comprenant une embase venant s'accoupler sur le socle de réception.

Selon une autre caractéristique de l'invention, l'accouplement de l'embase du récipient de travail sur le socle de réception du boitier moteur s'effectue par un simple mouvement en translation verticale.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, le récipient étant désaccouplé au boîtier moteur.
- la figure 2 est une vue en perspective du récipient de travail de l'appareil de la figure 1 représenté démuni de son couvercle et avec l'embase amovible désaccouplée de l'enveloppe,
- la figure 3 est une vue en perspective du dessous de l'embase amovible de la figure 2,
- la figure 4 est une vue de dessus de l'embase amovible de la figure 2,
- la figure 5 est une vue en perspective d'un doigt de blocage équipant l'embase amovible de la figure 2,
- la figure 6 est une vue en coupe de l'embase amovible selon la ligne VI-VI de la figure 4,
- la figure 7 est une vue en perspective de l'embase amovible de la figure 2 tenu à l'envers,
- les figures 8 et 9 sont des vues en coupe du récipient de travail selon la ligne VIII-VIII de la figure 4, lorsque le récipient de travail est respectivement tenu à l'endroit et à l'envers.

Seuls les éléments nécessaires à la compréhension de l'invention ont été représentés. Pour faciliter la lecture des dessins les mêmes éléments portent les mêmes références d'une figure à l'autre.

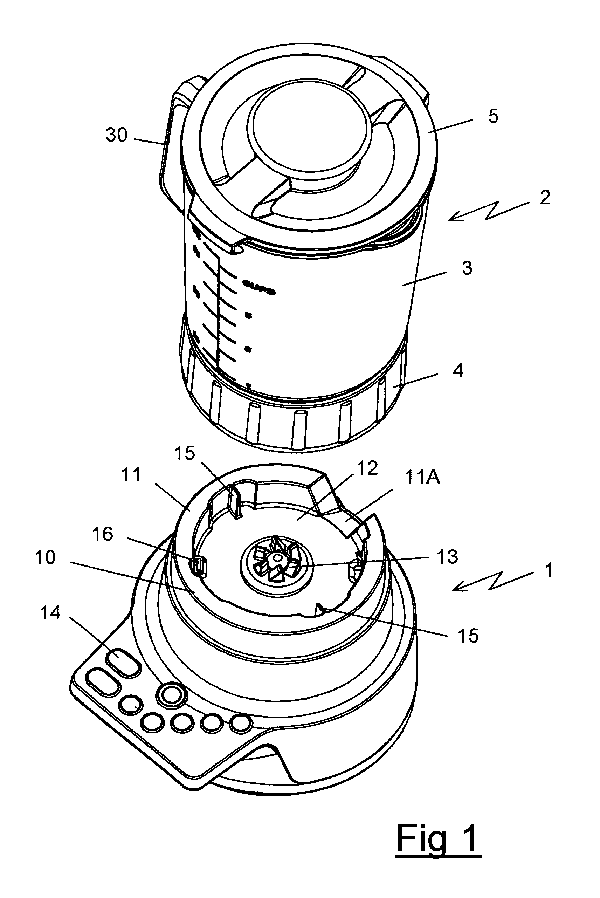

La figure 1 illustre un appareil électroménager de préparation culinaire selon l'invention comportant un boîtier moteur 1 et un récipient de travail 2 muni d'un couvercle 5, le récipient de travail 2 comprenant une enveloppe 3 équipée d'une poignée et une embase 4 amovible destinée à être mise en place sur un socle de réception 10 du boîtier moteur 1 selon un simple mouvement de translation verticale.

Le socle de réception 10 comporte une bague périphérique 11 coopérant avec l'embase 4 pour assurer le centrage du récipient de travail 2 sur le boitier moteur 1 et comporte une cavité 12 centrale recevant un entraîneur 13 entrainé en rotation par un moteur, non représenté sur les figures, intégré dans le boîtier moteur 1, le fonctionnement du moteur étant commandé par une série de boutons 14 disposé sur un panneau de commande.

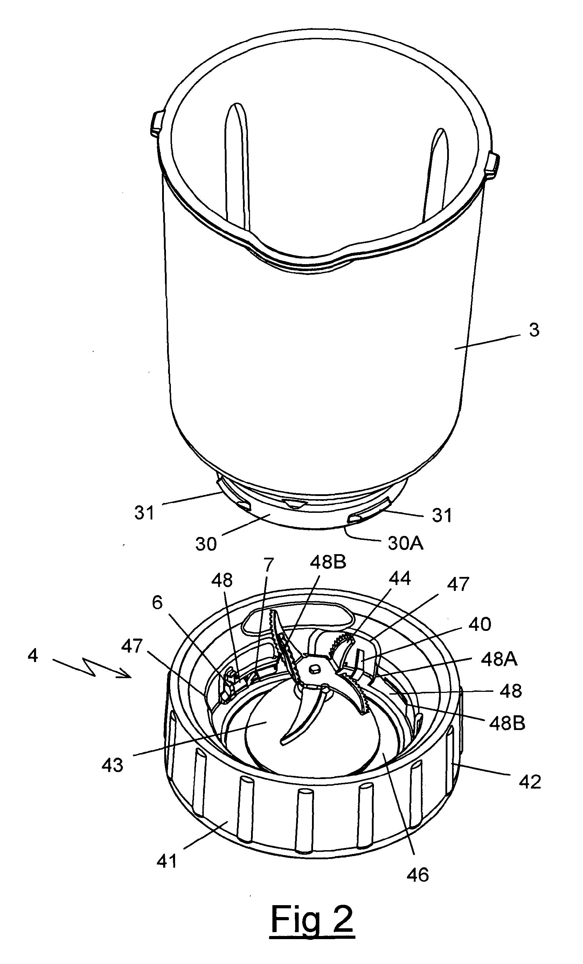

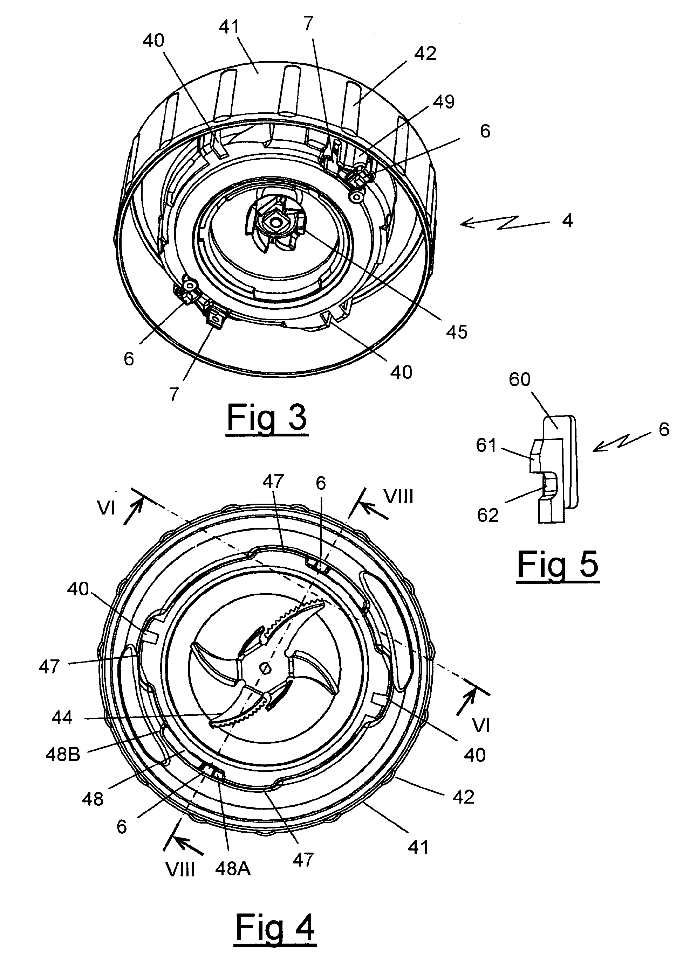

La bague périphérique 11 comporte localement une brèche 11A permettant l'évacuation automatique de tout liquide déversé dans la cavité 12, et comprend deux éléments détrompeurs 15, disposées à 180° l'un de l'autre, permettant l'engagement de l'embase 4 du récipient de travail 2 sur le socle de réception 10 selon seulement deux orientations possibles, ces éléments détrompeurs 15 venant s'engager dans des rainures 40 de l'embase 4, visibles sur les figures 2 et 3, lorsque le récipient de travail 2 est amené sur le boitier moteur 1 par un mouvement de translation verticale.

Le boîtier 1 moteur comporte également, de manière connue en soi, un dispositif de sécurité comprenant une tige de sécurité 16 ramenée dans une position de repos par un ressort et pouvant se déplacer verticalement vers le bas pour actionner un interrupteur autorisant le fonctionnement du moteur.

Conformément à la figure 2, l'embase 4 comporte une jupe périphérique 41 comprenant une paroi externe munie de reliefs 42 favorisant sa préhension et comprend une paroi interne délimitant une cavité centrale recevant une platine porte-outil 43 comprenant un outil rotatif 44 solidaire d'un axe dont l'extrémité inférieure est reliée à une douille 45, visible sur la figure 3, venant s'engager sur l'entraîneur 13 du boîtier moteur 1 lorsque le récipient de travail 2 est disposé sur le socle de réception 10.

De manière préférentielle, l'enveloppe 3 du récipient de travail 2 est réalisée en verre et comprend une extrémité inférieure munie d'un manchon d'accouplement 30 comprenant une ouverture 30A dans laquelle vient s'engager l'outil rotatif 44 lorsque le manchon d'accouplement 30 est engagé dans la cavité centrale de l'embase 4, l'embase 4 comportant un joint 46 annulaire assurant l'étanchéité de la liaison entre l'extrémité inférieure du manchon d'accouplement 30 et l'embase 4.

Le manchon d'accouplement 30 comprend avantageusement quatre nervures 31, disposées à 90° l'une de l'autre, qui viennent s'engager, par un mouvement axial de l'embase 4 par rapport à l'enveloppe 3, dans des échancrures 47 formées sur la paroi interne de l'embase 4, la paroi interne comportant des rainures de guidage 48 comprenant une extrémité ouverte 48A débouchant latéralement sur les échancrures 47 de telles sorte que les nervures 31 puissent s'engager dans les rainures de guidage 48, par rotation de l'enveloppe 3 dans le sens horaire, lorsque l'extrémité inférieure du manchon d'accouplement 30 repose contre le joint 46, réalisant ainsi une liaison de type baïonnette.

De manière préférentielle, les rainures de guidages 48 présentent une longueur circonférentielle légèrement supérieure à la longueur des nervures 31 et présentent une extrémité fermée formant une butée 48B stoppant la rotation de l'enveloppe 3 lorsque cette dernière est correctement accouplée à l'embase.

Plus particulièrement selon l'invention, le récipient de travail 2 comporte des moyens de verrouillage 6 interdisant le désaccouplement de l'embase lorsque le récipient 2 est tenu à l'endroit.

Conformément aux figures 3 à 6, ces moyens de verrouillage sont constitués par un ergot de blocage 6 monté coulissant dans une glissière 49 verticale disposée au niveau de l'extrémité ouverte 48A d'au moins une des rainures de guidage 48, et préférentiellement de deux rainures de guidages 48 disposées à l'opposé l'une de l'autre. Chaque ergot de blocage 6 comporte avantageusement une plaque de guidage 60 supportant une tête 61 faisant saillie au travers d'une rainure verticale 49A formée dans la paroi interne de l'embase 4, la tête 61 surmontant une encoche 62 de forme semblable à la section transversale de la rainure de guidage 48.

Les ergots de blocage 6 sont mobiles entre une position de verrouillage, vers laquelle ils coulissent par gravité lorsque l'embase 4 est disposée à l'endroit, et une position de déverrouillage vers laquelle ils coulissent par gravité lorsque l'embase 4 est retournée pour se trouver à l'envers.

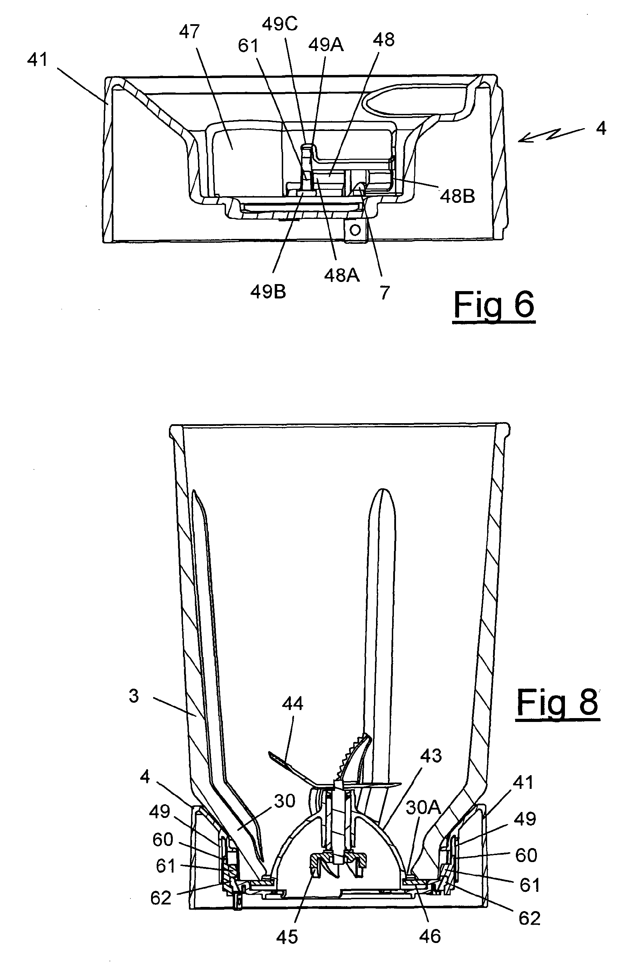

Dans la position de verrouillage, illustrée notamment sur les figures 2 et 6, le bord inférieur de la tête 61 repose contre une butée inférieure 49B portée par la paroi interne de l'embase 4 de telle sorte que l'ergot de blocage 6 se trouve immobilisé dans une position dans laquelle la tête 61 fait saillie au travers de la rainure de guidage 48.

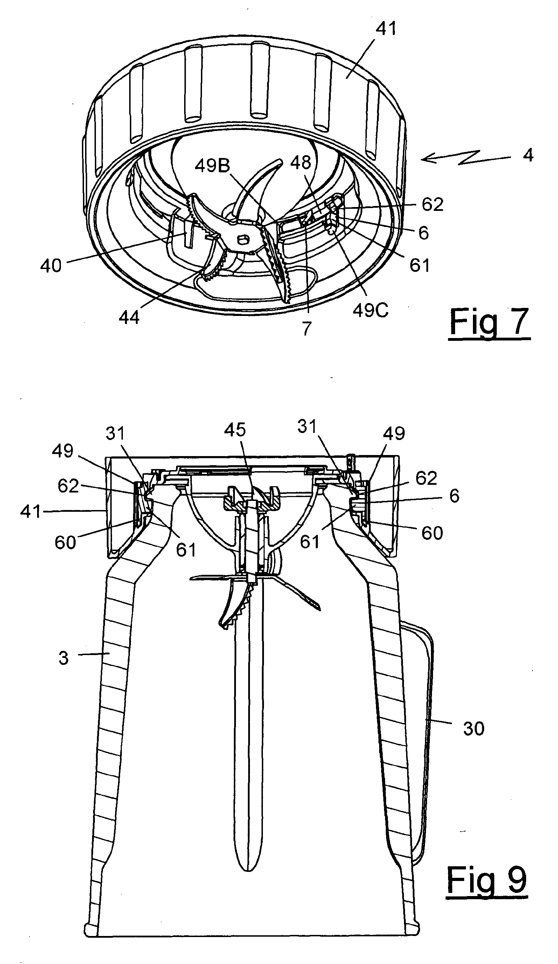

Dans la position de déverrouillage, illustrée sur la figure 7, le bord supérieur de la tête 61 repose sur une butée supérieure 49C portée par la paroi interne de l'embase 4 de telle sorte que l'ergot de blocage 6 se trouve immobilisé dans une position dans laquelle l'encoche 62 se trouve à hauteur de la rainure de guidage 48.

De manière avantageuse, l'embase 4 comporte également un dispositif de détection de la présence de l'enveloppe constitué par un doigt de sécurité 7 traversant perpendiculairement les rainures de guidage 48 recevant les ergots de blocage 6. Lorsque l'enveloppe 3 est accouplée à l'embase 4, le doigt de sécurité 7 est immobilisé dans une position basse, illustrée sur la figure 7, par la présence de la nervure 31 du manchon d'accouplement 30 au dessus du doigt de sécurité 7 et vient actionner la tige de sécurité 16 du boitier moteur 1 lorsque l'embase 4 est disposée sur le boitier moteur 1. A l'inverse, lorsque l'embase 4 est disposée sur le boitier moteur 1 sans que l'enveloppe soit accouplée à l'embase 4, le doigt de sécurité 7 coulisse vers une position haute sans actionner la tige de sécurité 16.

Le fonctionnement du dispositif de verrouillage va maintenant être décrit en relation avec les figures 8 et 9.

La figure 8 illustre le récipient de travail 2 avec l'enveloppe 3 accouplée à l'embase 4 lorsque le récipient de travail 2 est disposé à l'endroit. Dans cette position, les ergots de blocage 6 sont amenés par gravité dans la position de verrouillage dans laquelle la tête 61 de l'ergot de blocage 6 fait saillie à l'extrémité ouverte 48A de la rainure de guidage 48 de sorte que le démontage de l'enveloppe 3 est rendu impossible, la nervure 31 du manchon d'accouplement 30 venant buter contre la tête 61 de l'ergot de blocage 6 lorsqu'une rotation dans le sens du desserrage est exercée sur l'enveloppe 3.

Pour pouvoir désaccoupler l'embase 4 amovible de l'enveloppe 3 du récipient de travail 2, l'utilisateur est obligé de tenir le récipient de travail 2 à l'envers, de manière à ce que les doigts de blocage 6 soient amenés par gravité dans la position de déverrouillage dans laquelle l'encoche 62 se trouve en regard de la rainure de guidage 48 de sorte que la nervure 31 du manchon d'accouplement 30 peut être amenée dans les échancrures 47 par rotation de l'enveloppe 3 dans le sens du desserrage, ainsi que cela est représenté sur la figure 9.

Le récipient de travail ainsi réalisé présente donc une grande sécurité d'utilisation en ne permettant le démontage de l'embase amovible que lorsque le récipient de travail est tenu à l'envers. On évite ainsi tout désaccouplement accidentel de l'embase, notamment lors des phases de mise en place et de retrait du récipient de travail sur le boitier moteur, ou lors de la manipulation du récipient sur un plan de travail.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Récipient de travail (2) pour appareil électroménager de préparation culinaire comportant une embase (4) amovible et une enveloppe (3) comprenant une extrémité inférieure munie d'une ouverture (30A) entourée d'un manchon (30) sur lequel ladite embase (4) peut être accouplée par rotation, ladite embase (4) comprenant une platine porte-outil (43) destinée à venir au travers de ladite ouverture (30A), le récipient de travail (2) comportant des moyens de verrouillage (6) mobiles entre une position de verrouillage, dans laquelle l'embase (4) et l'enveloppe (3) ne peuvent pas être désaccouplées, et une position de déverrouillage dans laquelle elles peuvent être désaccouplées, **caractérisé en ce que** les moyens de verrouillage (6) occupent la position de verrouillage lorsque le récipient de travail (2) est tenu à l'endroit et la position de déverrouillage lorsque le récipient de travail (2) est tenu à l'envers.

2. Récipient de travail selon la revendication 1, **caractérisé en ce que** lesdits moyens de verrouillage (6) se déplacent de la position de verrouillage à la position de déverrouillage sous l'effet de la gravité, lors du retournement du récipient de travail.

3. Récipient de travail selon la revendication 2, **caractérisé en ce que** lesdits moyens de verrouillage comportent au moins un ergot de blocage (6) coulissant dans une glissière (49) verticale entre une position de verrouillage occupée lorsque le récipient de travail (2) est tenu à l'endroit et une position de déverrouillage occupée lorsque le récipient est tenu à l'envers.

4. Récipient de travail selon la revendication 3, **caractérisé en ce que** le manchon (30) comporte des nervures (31) venant s'engager par rotation dans une rainure de guidage (48) portée par ladite embase (4) pour former une liaison de type baïonnette.

5. Récipient de travail selon la revendication 3, **caractérisé en ce que**, en position de verrouillage, l'ergot de blocage (6) s'étend au travers de la rainure de guidage (48) et constitue une butée empêchant la rotation de l'enveloppe (3) dans le sens du démontage.

6. Appareil électroménager de préparation culinaire comportant un boîtier moteur (1) muni d'un socle de réception (10), **caractérisé en ce qu'**il comporte un récipient conforme à l'une des revendications 1 à 5 comprenant une embase (4) venant s'accoupler sur ledit socle de réception (10).

7. Appareil électroménager de préparation culinaire selon la revendication 6, **caractérisé en ce que** l'accouplement de l'embase (4) du récipient de travail (2) sur le socle de réception (10) du boitier moteur (1) s'effectue par un simple mouvement en translation verticale.

## Patentansprüche

1. Arbeitsbehälter (2) für ein Elektrohaushaltsgerät für die Zubereitung von Speisen mit einem abnehmbaren Sockel (4) und einer Ummantelung (3) mit einem unteren Ende, das mit einer Öffnung (30A) versehen ist, die von einer Manschette (30) umgeben ist, auf welcher der genannte Sockel (4) durch eine Drehung angeschlossen werden kann, wobei der Sockel (4) eine Werkzeugtragplatte (43) umfasst, die dazu bestimmt ist, durch die genannte Öffnung (30A) zu gelangen, wobei der Arbeitsbehälter (2) Verriegelungsmittel (6) umfasst, die zwischen einer Verriegelungsstellung, in welcher der Sockel (4) und die Ummantelung (3) nicht entkuppelt werden können, und einer Entriegelungsstellung, in der sie entkuppelt werden können, beweglich sind, **dadurch gekennzeichnet, dass** die Verriegelungsmittel (6) sich in der Verriegelungsstellung befinden, wenn der Arbeitsbehälter (2) aufrecht gehalten wird, und in der Entriegelungsstellung, wenn der Arbeitsbehälter (2) umgekehrt gehalten wird.

2. Arbeitsbehälter nach Anspruch 1, **dadurch gekennzeichnet, dass** die genannten Verriegelungsmittel (6) beim Umdrehen des Arbeitsbehälters unter Einwirkung der Schwerkraft von der Verriegelungsstellung in die Entriegelungsstellung rücken.

3. Arbeitsbehälter nach Anspruch 2, **dadurch gekennzeichnet, dass** die genannten Verriegelungsmittel mindestens eine Blockierverankerung (6) umfassen, die in einer vertikalen Schiene (49) gleitet, und zwar zwischen einer Verriegelungsstellung, die eingenommen wird, wenn der Arbeitsbehälter (2) aufrecht gehalten wird und einer Entriegelungsstellung, die eingenommen wird, wenn der Behälter umgekehrt gehalten wird.

4. Arbeitsbehälter nach Anspruch 3, **dadurch gekennzeichnet, dass** die Manschette (30) Rippen (31) umfasst, die durch eine Drehung in eine Führungsnut (48) einrasten, die durch den genannten Sockel (4) getragen wird, um eine bajonettverschlussartige Verbindung herzustellen.

5. Arbeitsbehälter nach Anspruch 3, **dadurch gekennzeichnet, dass** sich die Blockierverankerung (6) in der Verriegelungsstellung über die Führungsnut (48) erstreckt und einen Anschlag bildet, der eine Drehung der Ummantelung (3) in die Richtung verhindert, in der eine Ablösung erfolgt.

6. Elektrohaushaltsgerät für die Zubereitung von Speisen mit einem Motorgehäuse (1), das mit einem Aufnahmesockel (10) ausgestattet ist, **dadurch gekennzeichnet, dass** es einen Behälter umfasst, der einem der Ansprüche 1 bis 5 entspricht und einen Sockel (4) umfasst, der sich an den genannten Aufnahmesockel (10) ankuppeln lässt.

7. Elektrohaushaltsgerät für die Zubereitung von Speisen nach Anspruch 6, **dadurch gekennzeichnet, dass** die Ankupplung des Sockels (4) des Arbeitsbehälters (2) an den Aufnahmesockel (10) des Motorgehäuses (1) durch eine einfache vertikale Verschiebung erfolgt.

## Claims

1. Working receptacle (2) for electrical household food preparation appliance comprising a removable base (4) and an envelope (3) having a lower end equipped with an opening (30A) surrounded by a sleeve (30) on which said base (4) can be coupled by rotation, said base (4) comprising a tool-holding plate (43) designed to pass through said opening (30A), the working receptacle (2) having locking means (6) movable between a locking position, in which the base (4) and the envelope (3) cannot be uncoupled, and an unlocking position in which they can be uncoupled, **characterised in that** the locking means (6) occupy the locking position when the working receptacle (2) is held upright and the unlocking position when the working receptacle (2) is held upside down.

2. Working receptacle according to claim 1, **characterised in that** said locking means (6) move from the locking position to the unlocking position under the effect of gravity, when the working receptacle is turned upside down.

3. Working receptacle according to claim 2, **characterised in that** said locking means comprise at least one locking lug (6) running in a vertical slide (49) between a locking position occupied when the working receptacle (2) is held upright and an unlocking position occupied when the receptacle is held upside down.

4. Working receptacle according to claim 3, **characterised in that** the sleeve (30) has ribs (31) which are engaged by rotation in a guide groove (48) on said base (4) to form a bayonet type connection.

5. Working receptacle according to claim 3, **characterised in that**, in the locking position, the locking lug (6) extends through the guide groove (48) and forms a stop preventing rotation of the envelope (3) in the removal direction.

6. Electrical household food preparation appliance comprising a motor unit (1) equipped with a receiving support (10), **characterised in that** it comprises a receptacle according to one of claims 1 to 5 comprising a base (4) which couples with said receiving support (10).

7. Electrical household food preparation appliance according to claim 6, **characterised in that** the base (4) of the working receptacle (2) is coupled to the receiving support (10) of the motor unit (1) by a simple vertical translation movement.
